# EUROPÄISCHE PATENTANMELDUNG

(11) **EP 4 632 345 A1**
(43) Veröffentlichungstag der Anmeldung: **15.10.2025**
(21) Anmeldenummer: 25168572.3
(22) Anmeldetag: 04.04.2025
(51) Int. Cl.: G01L 19/00, G01L 27/00, G01L 27/02

(54) **VERFAHREN ZUM KALIBRIEREN EINES DRUCKMESSSYSTEMS SOWIE KALIBRIERBARES DRUCKMESSSYSTEM**

(30) Priorität: 08.04.2024 DE 102024109764
(71) Anmelder: LABOM Mess- und Regeltechnik GmbH, 27798 Hude (DE)
(72) Erfinder: Köster, Thomas, 26129 Oldenburg (DE); Rathkamp, Hans-Jürgen, 26209 Hatten (DE)
(74) Vertreter: Wasiljeff, Johannes M.B.

(57) **Zusammenfassung**

Die Erfindung betrifft ein Verfahren zum Kalibrieren eines zum Messen des Druckes in einem Prozess vorgesehenen Druckmesssystems (10; 60), das ein Druckmessgerät (12; 62) und einen Druckmittler (14; 64) mit einer Membran (16; 66) umfasst, deren eine Seite dem Prozess zugewandt ist und deren andere Seite mit einer Druckmittlerfüllflüssigkeit (18; 68) in Kontakt steht und ein Volumen im Druckmittler (14; 64) begrenzt. Dabei wird das Kalibrieren des Druckmesssystems (10; 60) bei ungeöffnetem Prozess durchgeführt, indem das Druckmessgerät (12; 62) vom Druckmittler (14; 64) funktional getrennt wird und danach das Druckmessgerät (12; 62) mittels einer vorbestimmten Druckvorgabe und einer Überprüfung eines sich aus dieser Druckvorgabe ergebenden Druckmesswertes des Druckmessgeräts (12; 62) kalibriert wird, und indem das Volumen im Druckmittler (14; 64) in einer vorbestimmten Weise verändert, vorzugsweise erhöht, wird und anhand einer erfassten, aus dieser Volumenänderung resultierenden Druckveränderung der Druckmittler (14; 64) kalibriert wird.

Ferner betrifft die Erfindung eine Vorrichtung zur Durchführung dieses Verfahrens.

## Beschreibung

Die Erfindung betrifft Verfahren zum Kalibrieren eines Druckmesssystems gemäß dem Oberbegriff von Anspruch 1 sowie ein kalibrierbares Druckmesssystem gemäß dem Oberbegriff von Anspruch 10 zur Durchführung dieses Verfahrens.

Die Erfindung befasst sich mit Druckmesssystemen für die präzise Druckmessung in der Prozessindustrie. Ein solches Druckmesssystem weist ein Druckmessgerät und einen Druckmittler auf. Der Druckmittler ist mit einer Druckmittlerfüllflüssigkeit gefüllt und umfasst eine Membran, deren eine Seite dem Prozess zugewandt ist und deren andere Seite mit der Druckmittlerfüllflüssigkeit in Kontakt steht. Derartige Druckmesssysteme müssen, z.B. in der Pharmaindustrie, regelmäßig, beispielsweise nach einer vorgegebenen Nutzungsdauer, kalibriert werden. Selbst ohne Beschädigung von Komponenten des Druckmesssystems, wie beispielsweise der Membran des Druckmittlers, ist eine Veränderung der Membransteifigkeit, beispielsweise durch Deformation der Membran, einen sich auf der Membran ablagernden Belag oder durch Korrosion der Membran, möglich. Auch eine Veränderung des Innendrucks, der in der Druckmittlerfüllflüssigkeit herrscht, ist möglich, beispielsweise durch Deformation oder Beschädigung der Membran.

Herkömmlicherweise werden zur Kalibrierung die in derartigen Druckmesssystemen verbauten Druckmessgeräte und Druckmittler aus dem Prozess ausgebaut und in einer Werkstatt oder in einem Labor überprüft. Zur Kalibrierung ist nämlich ein Referenzdruck erforderlich, der herkömmlicherweise im Prozess nicht bereitsteht.

Zur Kalibrierung muss daher herkömmlicherweise der Prozess unterbrochen und geöffnet werden, da der Prozessanschluss üblicherweise fest mit dem Druckmessgerät verbunden ist.

Je nach Gefährlichkeit des Prozessmediums und hygienischen Anforderungen des Prozesses ist dies ein aufwendiger und langwieriger Prozess. Ein daraus resultierender Stillstand des Prozesses führt ferner häufig zu hohen Kosten.

Aus DE 10 2021 133 085 A1 ist bekannt, wie ein Druckmessgerät vom Druckmittler mittels einer Schnellkupplung getrennt werden kann. Dies ermöglicht, eine Kalibrierung des Messgeräts vorzunehmen, ohne den Prozess öffnen zu müssen. Eine Überprüfung des Druckmittlers sieht dieser Stand der Technik jedoch nicht vor.

Der weitere Stand der Technik zeigt in das Druckmesssystem integrierte Elemente, die eine Auslenkung der Membran mittels geeigneter Auslenkelemente zum Zwecke der Überprüfung enthalten. Nachteilig an diesem Stand der Technik ist jedoch, dass diese Lösungen das Druckmesssystem aufwendig und teuer machen. Ferner ist an diesem Stand der Technik nachteilig, dass eine Alterung der Auslenkelemente als Alterung der Membran missinterpretiert werden kann. Außerdem muss zur Überprüfung der in solche Druckmesssysteme verbauten Messelektronik und des Sensorelements das Druckmesssystem weiterhin ausgebaut werden.

Ein Beispiel für derartigen Stand der Technik findet sich in DE 10 2005 055 285 A1. In diesem Druckmesssystem befindet sich ein hydraulischer Erreger in Form eines magnetostriktiven Füllkörpers, der von einer elektrischen Spule betätigt werden kann, wodurch sich das Volumen einer Druckmittlerfüllflüssigkeit in einem Druckmittler mit Membran verschiebt. Ein Messumformer wertet die resultierende Rückstellkraft der Membran aus, um eine Überwachung der Membran zu ermöglichen.

Ein weiteres Beispiel findet sich in DE 10 2018 133 053 A1. Bei diesem Druckmesssystem übt eine Auslenkeinrichtung mittels eines Elektromagneten eine Kraft auf eine Membran eines Druckmittlers aus. Eine sich durch Aktivierung des Elektromagneten ergebende Veränderung des Drucksignals wird ausgewertet, um eine mögliche Funktionsbeeinträchtigung des Druckmesssystems festzustellen.

Aus EP 3 767 266 A1 ist ein Druckmesssystem bekannt, bei dem im Druckmittler ein Druckerzeuger angeordnet ist, mittels dem statisch oder dynamisch ein Zusatzdruck erzeugt werden kann. Die Auswirkung dieses Zusatzdrucks auf das Messsignal wird ausgewertet, um die Funktionstüchtigkeit des Druckmittlersystems zu überprüfen.

Aus DE 10 2016 005 569 A1 ist ein Druckmesssystem bekannt, bei dem ein sogenanntes Volumenbauteil ein Verschieben einer Druckmittlerfüllflüssigkeit eines Druckmittlers mit Membran erlaubt, um die Membran in das Membranbett hineinzusaugen, um die Empfindlichkeit der Membran gegenüber Reinigungsprozessen zu vermindern. Dieses Druckmesssystem sieht jedoch keine Überprüfung der Membran vor. Eine Kalibrierung des Druckmesssystems ist ohne Ausbau auch hier nicht möglich.

Der Erfindung liegt daher die Aufgabe zu Grunde, ein kostengünstiges Verfahren und eine entsprechende Vorrichtung zur Kalibrierung eines Druckmesssystems mit einem Druckmessgerät und einem Druckmittler ohne Öffnung des Prozesses bereitzustellen.

Die Erfindung löst diese Aufgabe mit den Merkmalen eines Verfahrens gemäß Anspruch 1 sowie mit einem kalibrierbaren Druckmesssystem mit den Merkmalen gemäß Anspruch 10 zur Durchführung dieses Verfahrens.

Demnach sieht ein erfindungsgemäßes Verfahren zum Kalibrieren eines zum Messen des Drucks in einem Prozess vorgesehenen Druckmesssystems, das ein Druckmessgerät und einen Druckmittler mit einer Membran umfasst, deren eine Seite dem Prozess zugewandt ist und deren andere Seite mit einer Druckmittlerfüllflüssigkeit in Kontakt steht und ein Volumen im Druckmittler begrenzt, vor, dass das Kalibrieren des Druckmesssystems bei ungeöffnetem Prozess durchgeführt wird. Dabei wird das Druckmessgerät vom Druckmittler funktional getrennt und danach das Druckmessgerät mittels einer vorbestimmten Druckvorgabe und einer Überprüfung eines sich aus dieser Druckvorgabe ergebenden Druckmesswertes des Druckmessgeräts kalibriert. Ferner wird dabei das Volumen im Druckmittler in einer vorbestimmten Weise verändert, vorzugsweise erhöht, und anhand einer erfassten, aus dieser Volumenänderung resultierenden Druckveränderung der Druckmittler kalibriert.

Das erfindungsgemäße kalibrierbare Druckmesssystem zum Messen des Drucks in einem Prozess umfasst ein Druckmessgerät und einen Druckmittler mit einer Membran, deren eine Seite dem Prozess zugewandt ist und deren andere Seite mit einer Druckmittlerfüllflüssigkeit in Kontakt steht und ein Volumen im Druckmittler begrenzt. Dieses Druckmesssystem umfasst eine derartige Einrichtung zum funktionalen Trennen des Druckmessgeräts vom Druckmittler, dass eine Kalibrierung des Druckmesssystems bei geöffnetem Prozess durchführbar ist. Das Druckmesssystem umfasst ferner eine Druckmessgerätprüfvorrichtung, die derart ausgebildet ist, um bei funktionaler Trennung des Druckmessgeräts vom Druckmittler nur das Druckmessgerät mit einer vorbestimmten Druckvorgabe derart zu beaufschlagen, dass mittels einer Überprüfung eines sich aus dieser Druckvorgabe ergebenden Druckmesswertes des Druckmessgeräts das Druckmessgerät kalibriert wird. Ferner umfasst das Druckmessgerät eine Druckmittlerprüfvorrichtung, die derart ausgebildet ist, um das Volumen im Druckmittler in einer vorbestimmten Weise derart zu verändern, vorzugsweise zu erhöhen, dass mittels einer erfassten, aus der Volumenänderung resultierenden Druckveränderung der Druckmittler kalibriert wird.

Auf diese Weise kann erfindungsgemäß das ein Druckmessgerät und einen Druckmittler aufweisende Druckmesssystem ohne Öffnung des Prozesses kalibriert werden. Dies ermöglicht insbesondere eine Überprüfung des Druckmittlers auf Druckdichtigkeit, die beispielsweise durch einen Riss der Membran des Druckmittlers nicht mehr gegeben sein kann. Ist beispielsweise der Druck nach einer Änderung des Volumens im Druckmittler nicht stabil, sondern abfallend, ist auf einen Riss oder ein Loch in der Membran zu schließen. Ferner ermöglicht die Erfindung eine Überprüfung der Veränderung der Membransteifigkeit, die sich durch Deformation der Membran, einem Belag auf der Membran oder durch Korrosion ergeben kann. Ergibt sich beispielsweise nach einer Erhöhung des Volumens im Druckmittler ein höherer Druck als erwartet, wird auf einen Belag auf der Membran oder eine Deformation der Membran geschlossen. Ergibt sich hingegen nach einer Erhöhung des Volumens im Druckmittler ein niedrigerer Druck als erwartet, wird beispielsweise auf eine Korrosion oder einen Abtrag an der Membran geschlossen.

Gemäß einer Weiterbildung des erfindungsgemäßen Verfahrens wird bei funktionaler Trennung des Druckmessgeräts vom Druckmittler das Druckmessgerät auch mechanisch vom Druckmittler getrennt. Dabei sieht eine Weiterbildung des erfindungsgemäßen Druckmesssystems vor, dass die Einrichtung zum funktionalen Trennen des Druckmessgeräts vom Druckmittler eine hydraulische Kupplung, insbesondere hydraulische Schnellkupplung, ist. Die auf diese Weise ermöglichte funktionale und gleichzeitig mechanische Trennung von Druckmessgerät und Druckmittler ist vorteilhaft, da auf diese Weise das Druckmessgerät aus dem Prozess entfernt werden kann, um es beispielsweise in einer Werkstatt oder einem Labor zu überprüfen, zu kalibrieren und ggf. zu warten.

Diese Kupplung ist beispielsweise wie in DE 10 2021 133 085 A1 ausgebildet. Dies ist vorteilhaft, da eine derartige Kupplung eine Trennung ermöglicht, ohne dass Druckmittlerfüllflüssigkeit austritt und nach Verbinden und Schließen der Kupplung wieder nachgefüllt werden müsste.

Eine Weiterbildung des erfindungsgemäßen Verfahrens sieht vor, dass das Druckmessgerät mit einer Kalibriervorrichtung kalibriert wird. Dabei sieht eine Weiterbildung des erfindungsgemäßen Druckmesssystems vor, dass die Druckmessgerätprüfvorrichtung eine solche Kalibriervorrichtung ist. Eine derartige Kalibriervorrichtung ist vorteilhafterweise auf ein Drucknormal rückführbar oder zurückgeführt und/oder geeicht.

Eine Weiterbildung des erfindungsgemäßen Verfahrens bzw. des erfindungsgemäßen Druckmesssystems sieht vor, dass zum Kalibrieren des Druckmittlers anstelle des Druckmessgeräts eine Druckmittlerprüfvorrichtung mit dem Druckmittler verbunden wird. Dabei wird zunächst das Druckmessgerät entfernt und der Druckmittler mit der Druckmittlerprüfvorrichtung verbunden. Eine derartige Druckmittlerprüfvorrichtung ist vorteilhafterweise auf ein Drucknormal rückführbar oder zurückgeführt und/oder geeicht.

Eine Weiterbildung des erfindungsgemäßen Verfahrens sieht vor, dass mittels der Druckmittlerprüfvorrichtung das Volumen der Druckmittlerfüllflüssigkeit verändert wird. Dabei sieht eine Weiterbildung des erfindungsgemäßen Druckmesssystems vor, dass die Druckmittlerprüfvorrichtung derart ausgebildet ist, um bei funktionaler Trennung des Druckmessgeräts vom Druckmittler das Volumen der Druckmittlerfüllflüssigkeit zu verändern. Vorzugsweise ist dabei vorgesehen, dass nur das Volumen der Füllflüssigkeit im Druckmittler verändert wird, so dass sich eine Auswölbung der Membran aus dem Druckmittler heraus ergibt. Vorzugsweise wird dabei eine Änderung anderer Volumina, beispielsweise im Bereich der angeschlossenen Druckmessgerätprüfvorrichtung, konstruktiv vermieden. Dies ist vorteilhaft, um Einflüsse außerhalb des zu kalibrierenden Druckmesssystems auszuschließen.

Eine Weiterbildung des erfindungsgemäßen Verfahrens sieht vor, dass zum Kalibrieren des Druckmittlers mittels der Druckmittlerprüfvorrichtung ein oder mehrere Druckmittlerinnendrücke gemessen werden und ein erwartetes Verhalten des Druckmittlers mit dem realen Verhalten des Druckmittlers verglichen wird. Dabei sieht eine Weiterbildung des erfindungsgemäßen Druckmesssystems vor, dass die Druckmittlerprüfvorrichtung eine Einrichtung zum Messen eines oder mehrerer Druckmittlerinnendrücke aufweist und einen Vergleich mit Sollwerten ermöglicht, die vorgesehen ist, um den Druckmittler zu kalibrieren. Dieser Vergleich kann durch den Bediener oder automatisiert erfolgen. Bevorzugt ist für einen automatisierten Vergleich eine Einrichtung zum Vergleichen eines erwarteten Verhaltens des Druckmittlers mit dem realen Verhalten des Druckmittlers vorgesehen, die besonders bevorzugt in das Druckmesssystem integriert ist.

Aus dem Vergleich des erwarteten Verhaltens mit dem realen Verhalten des Druckmittlers wird erfindungsgemäß auf eine Beschädigung, insbesondere ein Loch oder einen Riss, der Membran geschlossen, wenn die Druckmittlerinnendrücke mit der Zeit abfallen. Ferner wird auf einen Belag auf der Membran oder eine Verformung der Membran geschlossen, wenn der bzw. die Druckmittlerinnendrücke höher als erwartet sind. Ferner wird auf eine Korrosion der Membran oder einen mechanischen Abtrag der Membran geschlossen, wenn der bzw. die Druckmittlerinnendrücke niedriger als erwartet sind.

Eine Weiterbildung des erfindungsgemäßen Verfahrens sieht vor, dass das Druckmesssystem eine mit dem Druckmessgerät, dem Druckmittler und einer Einrichtung zum funktionalen Trennen des Druckmessgeräts vom Druckmittler integrierte Druckmittlerprüfvorrichtung aufweist. Dabei sieht eine Weiterbildung des erfindungsgemäßen Druckmesssystems vor, dass die Druckmittlerprüfvorrichtung mit dem Druckmessgerät, dem Druckmittler und der Einrichtung zum funktionalen Trennen des Druckmessgeräts vom Druckmittler im Druckmesssystem integriert ist. Diese Integration der Druckmittlerprüfvorrichtung hat den Vorteil, dass eine Kalibrierung von Druckmittler und Druckmessgerät vor Ort ohne Ausbau oder Trennung des Druckmesssystems vom Prozess möglich ist.

Eine Weiterbildung des erfindungsgemäßen Verfahrens bzw. des erfindungsgemäßen Druckmesssystems sieht vor, dass mittels der Einrichtung zum funktionalen Trennen die Druckmittlerprüfvorrichtung zwischen verschiedenen Modi umgeschaltet werden kann. Zu diesen Modi zählen ein Messmodus, in dem, vorzugsweise nur, dass Druckmessgerät und der Druckmittler hydraulisch verbunden sind und der Druck im Prozess gemessen wird. Ferner zählt zu diesen Modi ein erster Kalibriermodus, in dem das Druckmessgerät mit dem Druckmittler und einer Druckmittlerprüfvorrichtung hydraulisch verbunden ist und der Druckmittler kalibriert wird. Ferner zählt zu diesen Modi ein zweiter Kalibriermodus, in dem, vorzugsweise nur, dass Druckmessgerät mit einem Prüfanschluss hydraulisch oder hydraulisch und pneumatisch verbunden ist und mittels einer externen Druckvorgabe kalibriert wird. Im Falle einer hydraulisch und pneumatischen Verbindung des Druckmessgeräts mit dem Prüfanschluss erfolgt eine Trennung eines hydraulischen Teils des Druckmesssystems zu einem pneumatischen Teil des Druckmesssystems mittels einer Trennmembran. Dadurch entsteht bei einer an den Prüfanschluss angeschlossenen Druckmittlerprüfvorrichtung eine pneumatische Verbindung von der Druckmittlerprüfvorrichtung bis zur Trennmembran und eine hydraulische Verbindung von der Trennmembran bis zum Druckmessgerät. Diese pneumatische Verbindung ist alternativ als ebenfalls hydraulische Verbindung ausgestaltet.

Eine Weiterbildung des erfindungsgemäßen Verfahrens bzw. des erfindungsgemäßen Druckmesssystems sieht vor, dass im ersten Kalibriermodus das Volumen der Füllflüssigkeit im Druckmittler verändert wird bzw. veränderbar ist. Diese Volumenveränderung erfolgt beispielsweise durch Verschieben eines Zylinders in einer Zylinder-Kolben-Einheit, wobei die Zylinder-Kolben-Einheit mit der Druckmittlerfüllflüssigkeit hydraulisch verbindbar ist.

Eine Weiterbildung des erfindungsgemäßen Verfahrens sieht vor, dass der Prüfanschluss mit einer Druckmessgerätprüfvorrichtung, vorzugsweise Kalibriervorrichtung, verbunden wird, wobei die externe Druckvorgabe von der Druckmessgerätprüfvorrichtung erzeugt wird und als Druckreferenz auf das Druckmessgerät einwirkt. Dabei sieht eine Weiterbildung des erfindungsgemäßen Druckmesssystems vor, dass der Prüfanschluss einen Kupplungsteil einer hydraulischen Kupplung, vorzugsweise hydraulischen Schnellkupplung, umfasst, der mit einem korrespondierend ausgebildeten Kupplungsteil der Druckmessgerätprüfvorrichtung, vorzugsweise Kalibriervorrichtung, derart zum Verbinden der hydraulischen Kupplung hydraulisch verbindbar ist, dass die externe Druckvorgabe von der Druckmessgerätprüfvorrichtung erzeugbar ist und als Druckreferenz auf das Druckmessgerät einwirken kann. Vorzugsweise ist die hydraulische Schnellkupplung wie in DE 10 2021 133 085 A1 ausgebildet. Dies ist wiederum deshalb vorteilhaft, da eine derartige Kupplung eine Trennung ermöglicht, ohne dass Hydraulikflüssigkeit austritt und nach Verbinden und Schließen der Kupplung wieder nachgefüllt werden müsste.

Weiterbildungen der Erfindung ergeben sich aus den Ansprüchen, der Beschreibung und den Zeichnungen. Die vorgenannten Vorteile von Merkmalen und von Kombinationen mehrerer Merkmale sind beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausgestaltungen der Erfindung oder von Merkmalen unterschiedlicher Ansprüche ist ebenfalls abweichend von den gewählten Rückbeziehungen der Ansprüche möglich und wird hiermit vorgeschlagen. Dies betrifft auch solche Merkmale, die in separaten Zeichnungen dargestellt sind oder bei deren Beschreibung genannt werden. Diese Merkmale können auch mit Merkmalen verschiedener Ansprüche kombiniert werden. Ebenso können in Ansprüchen aufgeführte Merkmale für weitere Ausführungen der Erfindung entfallen.

In der Zeichnung zeigen:
- Fig. 1: ein erstes Ausführungsbeispiel eines erfindungsgemäßen Druckmesssystems mit einem Druckmittler und einem Druckmessgerät, wobei der Druckmittler und das Druckmessgerät hydraulisch und mechanisch miteinander verbunden sind,
- Fig. 2: das in Fig. 1 gezeigte Druckmesssystem, wobei der Druckmittler und das Druckmessgerät hydraulisch und mechanisch voneinander getrennt sind,
- Fig. 3: das in Fig. 1 gezeigte Druckmesssystem, jedoch anstelle des Druckmessgeräts mit einer Druckmittlerprüfvorrichtung, wobei die Druckmittlerprüfvorrichtung hydraulisch vom Druckmittler getrennt ist,
- Fig. 4: das in Fig. 3 gezeigte Druckmesssystem, wobei die Druckmittlerprüfvorrichtung hydraulisch mit dem Druckmittler verbunden ist,
- Fig. 5: das in Fig. 4 gezeigte Druckmesssystem mit durch Zuführung eines zusätzlichen Volumens von Füllflüssigkeit erhöhtem Innendruck und ausgelenkter Membran,
- Fig. 6: eine schematische Ansicht einer Weiterentwicklung der in den Figu-ren 3 bis 5 gezeigten Druckmittlerprüfvorrichtung,
- Fig. 7: ein zweites Ausführungsbeispiel eines erfindungsgemäßen Druckmesssystems, bei dem eine Druckmittlerprüfvorrichtung mit einer Vorrichtung zum Fördern eines definierten Volumens in das Druckmesssystem integriert ist, wobei die Vorrichtung zum Fördern eines definierten Volumens hydraulisch vom Druckmittler und Druckmessgerät getrennt ist und ein Messmodus vorliegt,
- Fig. 8: das in Fig. 7 gezeigte Druckmesssystem in einem ersten Kalibriermodus, wobei die Vorrichtung zum Fördern eines definierten Volumens hydraulisch mit dem Druckmittler und Druckmessgerät verbunden ist,
- Fig. 9: das in Fig. 8 gezeigte Druckmesssystem im ersten Kalibriermodus, wobei mittels der Vorrichtung zum Fördern eines definierten Volumens ein zusätzliches Volumen von Füllflüssigkeit zugeführt worden ist und für einen erhöhten Innendruck und eine ausgelenkte Membran sorgt,
- Fig. 10: das in den Figuren 7 bis 9 gezeigte Druckmesssystem in einem zweiten Kalibriermodus, in dem das Druckmessgerät mit einem Prüfanschluss hydraulisch verbunden ist, an den eine Druckmessgerätprüfvorrichtung angeschlossen ist.

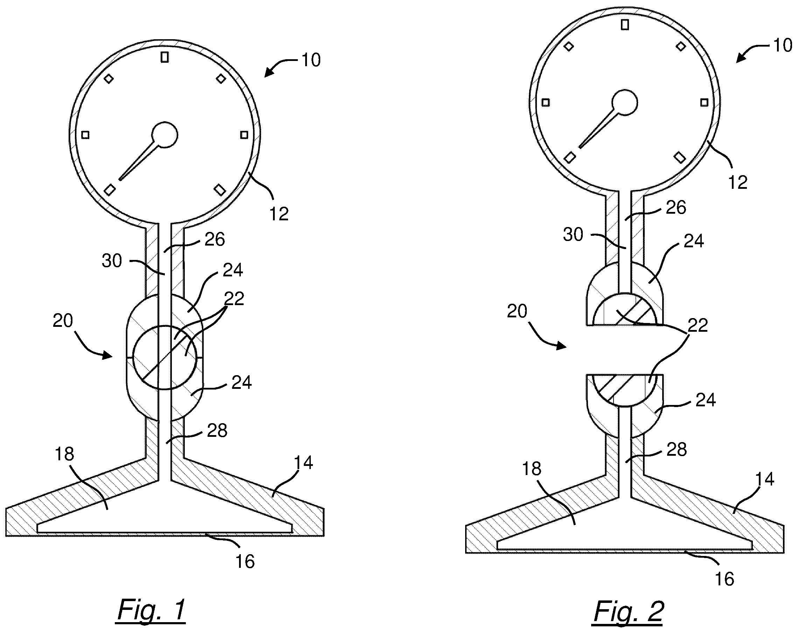

Fig. 1 zeigt ein erstes Ausführungsbeispiel eines erfindungsgemäßen Druckmesssystems 10 mit einem Druckmessgerät 12 und einem Druckmittler 14. Der Druckmittler 14 weist eine Membran 16 auf und ist mit einer Druckmittlerfüllflüssigkeit 18 gefüllt.

Das Druckmessgerät 12 und der Druckmittler 14 sind über eine Einrichtung 20 zum funktionalen Trennen des Druckmessgeräts 12 vom Druckmittler 14 verbunden. D.h., dass mittels der Einrichtung 20 zum funktionalen Trennen einerseits das Druckmessgerät 12 mit dem Druckmittler 14 hydraulisch verbunden sein kann und andererseits das Druckmessgerät 12 hydraulisch vom Druckmittler 14 getrennt sein kann. Durch die hydraulische Trennung ergibt sich eine funktionale Trennung von Druckmessgerät 12 und Druckmittler 14. Die Einrichtung 20 zum funktionalen Trennen weist dazu ein Absperrelement 22 auf, das in dem hydraulischen Weg zwischen dem Druckmessgerät 12 und dem Druckmittler 14 angeordnet ist.

Die Einrichtung zum funktionalen Trennen 20 ist vorzugsweise eine hydraulische Kupplung mit zwei aneinander angepassten identischen Kupplungsteilen 24, wie sie in DE 10 2021 133 085 A1 beschrieben ist. Diese Kupplungsteile 24 sind derart ausgebildet, dass sie einerseits eine hydraulische Verbindung, andererseits aber auch eine mechanische Verbindung zwischen dem Druckmessgerät 12 und dem Druckmittler 14 herstellt, wenn die Kupplung geschlossen ist. Umgekehrt führt eine geöffnete Kupplung dazu, dass sowohl die hydraulische Verbindung, als auch die mechanische Verbindung von Druckmessgerät 12 und Druckmittler gelöst ist und zugleich die hydraulische Leitung 26 des Druckmessgeräts 12 und die hydraulische Leitung 28 des Druckmittlers 14 geschlossen sind, so dass keine Druckmittlerfüllflüssigkeit 18 bzw. Füllflüssigkeit 30 des Druckmessgeräts 12 austreten kann. In der Konsequenz muss nach einem Schließen der Kupplung nach vorangegangenem Öffnen der Kupplung keine Druckmittlerfüllflüssigkeit 18 bzw. Füllflüssigkeit 30 des Druckmessgeräts 12 nachgefüllt werden.

Fig. 2 zeigt, wie zum Kalibrieren des Druckmesssystems 10 die Einrichtung 20 zum funktionalen Trennen geöffnet wird. Da es sich bei der Einrichtung 20 zum funktionalen Trennen um die o.g. Kupplung mit den beiden Kupplungsteilen 24 handelt, wird sowohl die hydraulische Leitung 26 des Druckmessgeräts 12, als auch die hydraulische Leitung 28 des Druckmittlers 14 abgesperrt und das Druckmessgerät 12 vom Druckmittler 14 mechanisch getrennt.

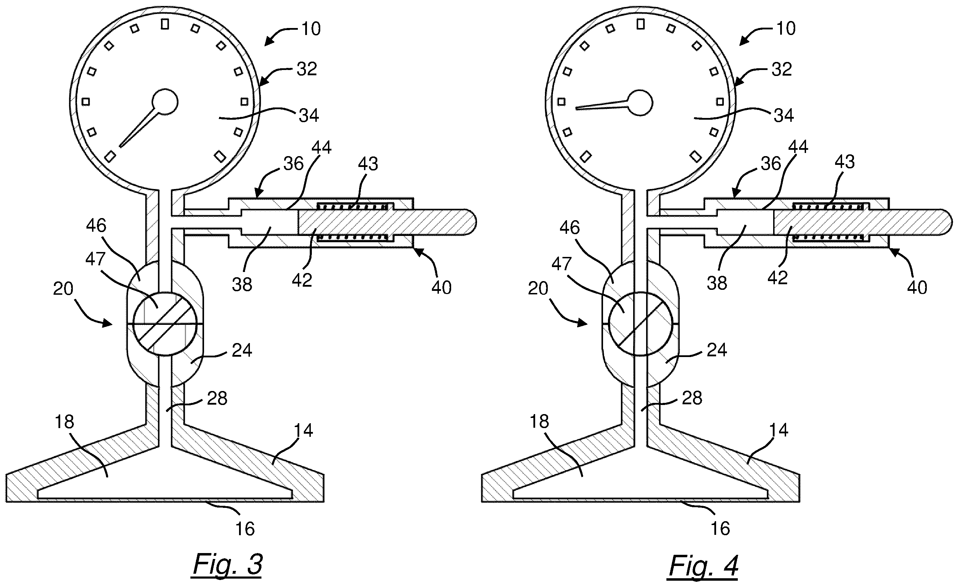

Fig. 3 zeigt anstelle des in den Figuren 1 und 2 gezeigten Druckmessgeräts 12 eine Druckmittlerprüfvorrichtung 32, die einerseits ein Druckmessinstrument 34 und andererseits eine Vorrichtung 36 zum Fördern eines definierten Volumens einer Füllflüssigkeit 38 aufweist.

Bei der Vorrichtung 36 zum Fördern eines definierten Volumens handelt es sich vorzugsweise um eine Zylinder-Kolben-Einheit 40, bei der ein Kolben 42 mittels einer Feder 43 aus der Zylinder-Kolben-Einheit 40 bis zu einer in Fig. 3 dargestellten Anschlagposition herausgedrückt wird. Der Kolben 42 ist in einem Zylinder 44 geführt, der mit der Füllflüssigkeit 38 gefüllt ist.

Die Druckmittlerprüfvorrichtung 32 weist ein Kupplungsteil 46 für eine in DE 10 2021 133 085 A1 beschriebene hydraulische Kupplung auf, das identisch wie die o.g. Kupplungsteile 24 ausgebildet ist und ein Absperrelement 47 aufweist. Das Kupplungsteil 46 ermöglicht somit zusammen mit dem Kupplungsteil 24 am Druckmittel 14 die Druckmittlerprüfvorrichtung 32 mit dem Druckmittler 14 hydraulisch und mechanisch zu verbinden.

In Fig. 3 liegen das Kupplungsteil 24 des Druckmittlers 14 und das Kupplungsteil 46 der Druckmittlerprüfvorrichtung 32 aneinander, ohne dabei jedoch bereits hydraulisch verbunden zu sein.

Fig. 4 zeigt hingegen das in Fig. 3 gezeigte System aus Druckmittler 14 und Druckmittlerprüfvorrichtung 32 mit hydraulischer Verbindung des Druckmittlers 14 und der Druckmittlerprüfvorrichtung 32, indem das Absperrelement 22 des Kupplungsteils 24 des Druckmittlers 14 und das Absperrelement 47 des Kupplungsteils 46 der Druckmittlerprüfvorrichtung 32 miteinander verdreht worden sind.

Wie in Fig. 4 gezeigt, gibt das Druckmessinstrument 34 der Druckmittlerprüfvorrichtung 32 nach dem Schließen der durch das Kupplungsteil 24 des Druckmittlers 14 und das Kupplungsteil 46 der Druckmittlerprüfvorrichtung 32 gebildeten hydraulischen Kupplung einen Innendruck des Druckmittlers 14 an. Wenn der Innendruck nicht einem erwarteten Wert entspricht, wird auf eine Deformation oder Beschädigung der Membran, beispielsweise ein Loch oder einen Riss, geschlossen.

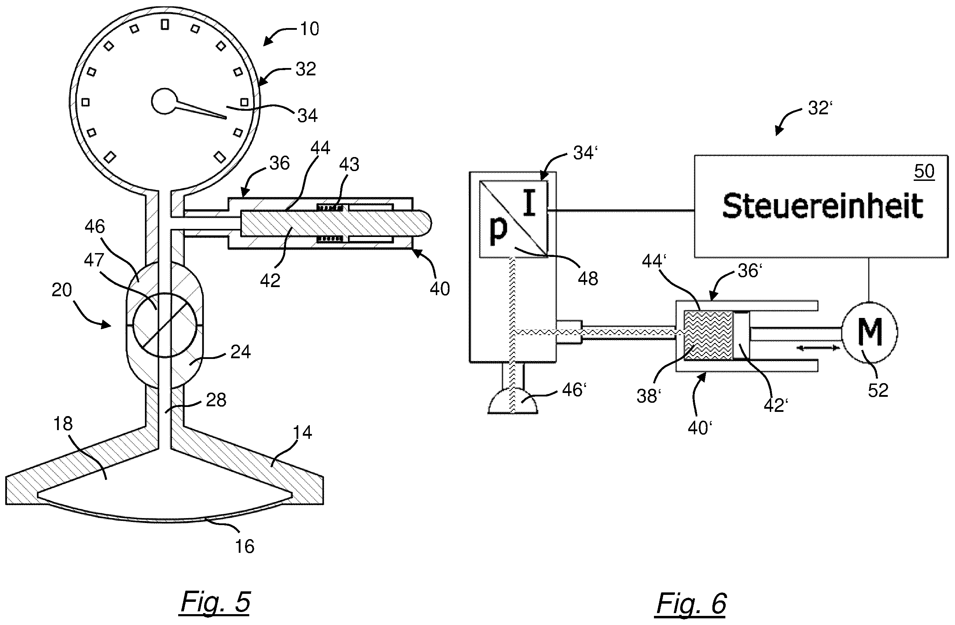

Fig. 5 zeigt das in Fig. 4 gezeigte System aus Druckmittler 14 und Druckmittlerprüfvorrichtung 32 nach Betätigung der Vorrichtung 36 zum Fördern eines definierten Volumens durch Drücken des Kolbens 42 hinein in den Zylinder 44, so dass sich die Füllflüssigkeit 38, die sich zuvor gemäß Fig. 4 im Zylinder 44 befand, verschoben hat und ein dem Volumen dieser Füllflüssigkeit 38 entsprechendes Volumen dem Druckmittler 14 zugeführt worden ist. Hierdurch wölbt bzw. lenkt sich die Membran 16 aus und der vom Druckmessinstrument 34 angegebene Innendruck ist angestiegen.

Erfindungsgemäß ist nun eine Überprüfung vorgesehen, ob der entstandene, zusätzliche Innendruck infolge der Auslenkung der Membran 16 innerhalb eines erwarteten, vordefinierten Bereichs liegt. Dieser vordefinierte Bereich ist abhängig von der Spezifikation des Druckmittlers 14.

Wenn der entstandene, zusätzliche Innendruck nicht stabil ist, sondern abfällt, wird auf ein Loch oder einen Riss in der Membran 16 geschlossen.

Wenn der entstandene, zusätzliche Innendruck höher als erwartet ausfällt, wird auf einen Belag auf der Membran 16 oder eine Verformung der Membran 16 geschlossen.

Wenn der entstandene, zusätzliche Innendruck niedriger als erwartet ausfällt, wird auf eine Korrosion der Membran 16 oder einen mechanischen Abtrag an der Membran 16 geschlossen.

Anhand des vom Druckmessinstrument 34 angegebenen Innendrucks wird der Druckmittler kalibriert.

Schließlich wird der Kolben 42 wieder aus dem Zylinder 44 herausgezogen bzw. mittels Federkraft herausgedrückt und das zuvor eingebrachte Volumen von Füllflüssigkeit 38 aus dem Druckmittler 14 entfernt und anschließend die Druckmittlerprüfvorrichtung 32 wieder durch Entkoppeln des Kupplungsteils 24 des Druckmittlers 14 vom Kupplungsteil 46 der Druckmittlerprüfvorrichtung 32 getrennt.

Vor, während oder nach der Kalibrierung des Druckmittlers 14 erfolgt eine Kalibrierung des Druckmessgeräts 12 mittels einer Druckmessgerätprüfvorrichtung (nicht dargestellt). Eine solche Druckmessgerätprüfvorrichtung ist derart ausgebildet, um bei optionaler Trennung des Druckmessgeräts 12 vom Druckmittler 14 nur das Druckmessgerät 12 mit einer vorbestimmten Druckvorgabe derart zu beaufschlagen, dass mittels einer Überprüfung eines sich aus dieser Druckvorgabe ergebenden Druckmesswertes des Druckmessgeräts 12 das Druckmessgerät 12 kalibriert wird.

In den Figuren 1 bis 5 ist die Vorrichtung 36 zum Fördern eines definierten Volumens als handbetätigbare Zylinder-Kolben-Einheit 40 dargestellt.

Fig. 6 zeigt schematisch eine weiterentwickelte Druckmittlerprüfvorrichtung 32' mit einem elektrischen bzw. elektronischen Druckmessinstrument 34' und einem Kupplungsteil 46' dieser Druckmittlerprüfvorrichtung 32', das mit dem Kupplungsteil 24 des Druckmittlers 14 verbindbar ist. Ferner weist diese Druckmittlerprüfvorrichtung 32' eine Vorrichtung 36' zum Fördern eines definierten Volumens auf, die eine motorisch angetriebene Zylinder-Kolben-Einheit 40' aufweist.

Das Druckmessinstrument 34' weist einen Drucksensor 48 auf, der mit einer Steuereinheit 50 verbunden ist. Die motorisch angetriebene Zylinder-Kolben-Einheit 40' weist einen Stellmotor 52 zum Verschieben des Kolbens 42' auf. Dieser Stellmotor 52 ist ebenfalls mit der Steuereinheit 50 verbunden. Der Kolben 42' kann sich somit innerhalb des Zylinders 44' bewegen, der mit Füllflüssigkeit 38' gefüllt ist, die mit dem Drucksensor 48 und dem Druckmittler 14 kommuniziert.

Mittels der Steuereinheit 50, dem Stellmotor 52 und dem Drucksensor 48 wird die Überprüfung und Kalibrierung des Druckmittlers 14 automatisiert, indem die von der Vorrichtung 36' zum Fördern eines definierten Volumens bewirkte Volumenänderung von der Steuereinheit 50 zentral gesteuert wird und automatisiert ein Vergleich der Messwerte des Drucksensors 48 mit erwarteten Werten durchgeführt wird.

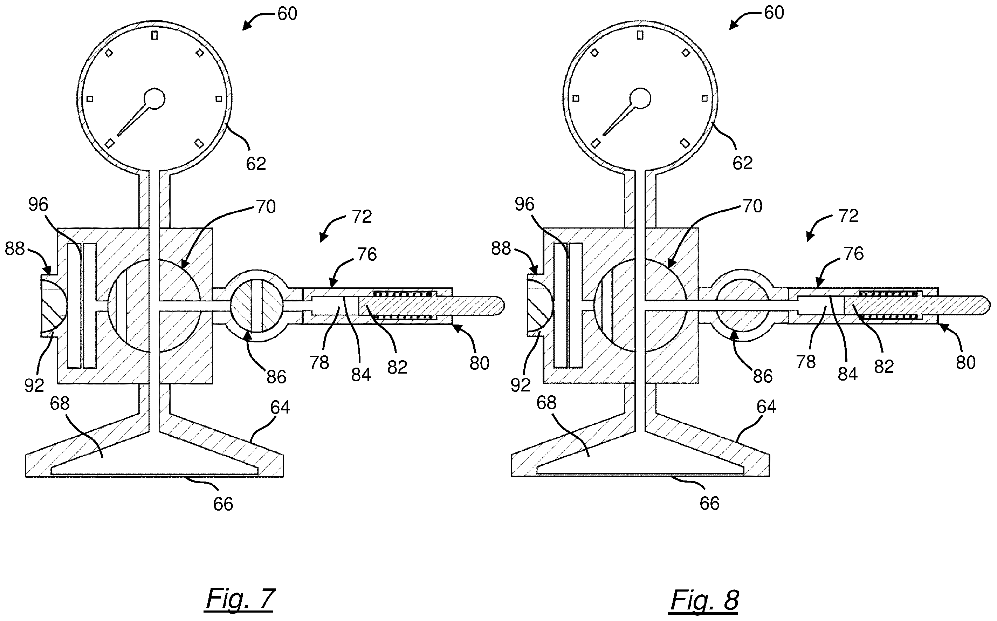

Fig. 7 zeigt ein zweites Ausführungsbeispiel eines erfindungsgemäßen Druckmesssystems 60 mit einem Druckmessgerät 62 und einem Druckmittler 64. Der Druckmittler 64 weist eine Membran 66 auf und ist mit Druckmittlerfüllflüssigkeit 68 gefüllt.

Das Druckmessgerät 62 und der Druckmittler 64 sind über eine Einrichtung 70 zum funktionalen Trennen des Druckmessgeräts 62 vom Druckmittler 64 verbunden. Mittels der Einrichtung 70 zum funktionalen Trennen kann einerseits das Druckmessgerät 62 mit dem Druckmittler 64 hydraulisch verbunden sein und andererseits das Druckmessgerät 62 hydraulisch vom Druckmittler 64 getrennt sein.

In dieses Druckmesssystem 60 ist eine Druckmittlerprüfvorrichtung 72 integriert und zwar zusammen mit dem Druckmessgerät 62, dem Druckmittler 64 und der Einrichtung 70 zum funktionalen Trennen des Druckmessgeräts 62 vom Druckmittler 64. Aufgrund dieser integrierten Ausbildung von Druckmittlerprüfvorrichtung 72, Druckmessgerät 62, Druckmittler 64 und Einrichtung 70 zum funktionalen Trennen verbleibt die Druckmittlerprüfvorrichtung 72 während eines laufenden Prozesses, also auch außerhalb eines Kalibriervorgangs im Gesamtsystem.

Die Druckmittlerprüfvorrichtung 72 umfasst eine Vorrichtung 76 zum Fördern eines definierten Volumens einer Füllflüssigkeit 78. Sie ist vorzugsweise als Zylinder-Kolben-Einheit 80 ausgebildet, bei der ein Kolben 82 mittels einer Feder 83 aus der Zylinder-Kolben-Einheit 80 bis zu einer in Fig. 7 dargestellten Anschlagposition herausgedrückt wird. Der Kolben 82 ist in einem Zylinder 84 geführt, der mit einer Füllflüssigkeit gefüllt ist.

Die Druckmittlerprüfvorrichtung 72 umfasst ein Absperrorgan 86, mittels dem die Vorrichtung 76 zum Fördern eines definierten Volumens hydraulisch von der Einrichtung 70 zum funktionalen Trennen des Druckmessgeräts 62 vom Druckmittler 64 abgesperrt bzw. mit dieser hydraulisch verbunden werden kann.

In Fig. 7 ist das Absperrorgan 68 in einer Absperrstellung dargestellt, in der die Vorrichtung 76 zum Fördern eines definierten Volumens von der Einrichtung 70 zum funktionalen Trennen hydraulisch abgesperrt ist. Das Druckmesssystem 60 befindet sich in einem Messmodus, wobei sich die Einrichtung 70 zum funktionalen Trennen in einer derartigen Stellung befindet, dass das Druckmessgerät 62 und der Druckmittler 64 hydraulisch miteinander verbunden sind. Das Druckmessgerät 62 ist in dieser Stellung in der Lage den Druck im Prozess zu messen.

Fig. 8 zeigt das Druckmesssystem 60 in einem ersten Kalibriermodus, in dem das Druckmessgerät 62 mit dem Druckmittler 64 und der Druckmittlerprüfvorrichtung 72 hydraulisch verbunden ist und der Druckmittler 64 kalibriert werden kann.

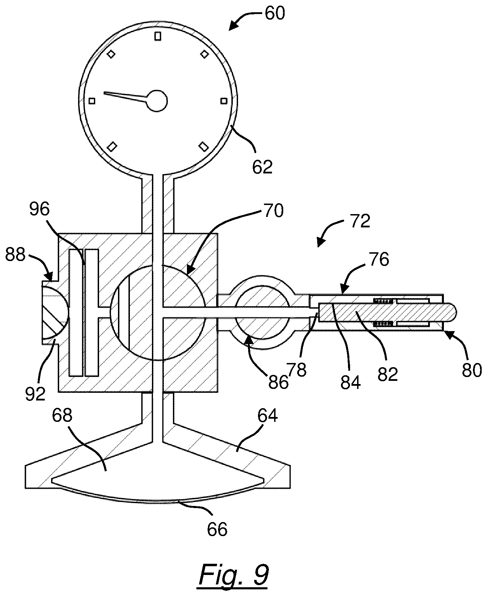

Fig. 9 zeigt ebenfalls den ersten Kalibriermodus, wobei nach Betätigung der Vorrichtung 76 zum Fördern eines definierten Volumens durch Drücken des Kolbens 82 hinein in den Zylinder 84 sich die Füllflüssigkeit 78, die sich zuvor gemäß Fig. 8 im Zylinder 84 befand, verschoben hat und ein dem Volumen dieser Füllflüssigkeit 78 entsprechendes Volumen dem Druckmittler 64 zugeführt worden ist. Infolgedessen ist die Membran 66 ausgewölbt bzw. ausgelenkt und der vom Druckmessgerät 62 angegebene Innendruck angestiegen.

Nun erfolgt analog den obigen Erläuterungen zum ersten Ausführungsbeispiel eine Überprüfung, ob der entstandene, zusätzliche Innendruck infolge der Auslenkung der Membran 66 innerhalb eines erwarteten, vordefinierten Bereichs liegt. Dieser vordefinierte Bereich ist abhängig von der Spezifikation des Druckmittlers 54.

Wenn der entstandene, zusätzliche Innendruck nicht stabil ist, sondern abfällt, wird auf ein Loch oder einen Riss in der Membran 66 geschlossen. Wenn der entstandene, zusätzliche Innendruck höher als erwartet ausfällt, wird auf einen Belag auf der Membran 66 oder eine Verformung der Membran 66 geschlossen. Wenn der entstandene, zusätzliche Innendruck niedriger als erwartet ausfällt, wird auf eine Korrosion der Membran 66 oder einen mechanischen Abtrag an der Membran 66 geschlossen. Anhand des vom Druckmessgerät 62 angegebenen Innendrucks wird der Druckmittler kalibriert.

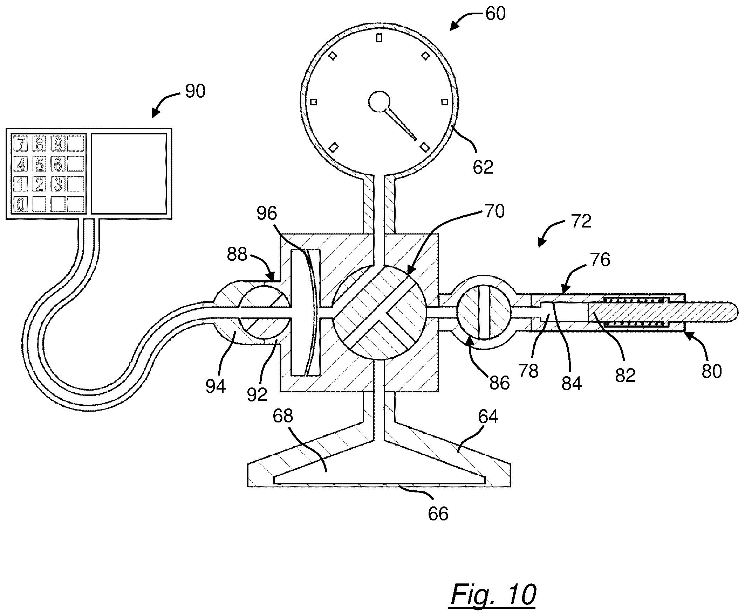

Anschließend wird der Kolben 82 wieder aus dem Zylinder 84 herausgezogen bzw. mittels Federkraft herausgedrückt und das zuvor eingebrachte Volumen von Füllflüssigkeit 78 aus dem Druckmittler 64 entfernt. Anschließend wird das Absperrorgan 86 in seiner in Fig. 10 dargestellten Absperrstellung umgeschaltet.

Fig. 10 zeigt das in den Figuren 7 bis 9 gezeigte Druckmesssystem 60 in einem zweiten Kalibriermodus, in dem das Druckmessgerät 62 mit einem Prüfanschluss 88 hydraulisch verbunden ist. An den Prüfanschluss 88 ist eine Druckmessgerätprüfvorrichtung 90 angeschlossen.

Der Prüfanschluss 88 umfasst einen Kupplungsteil 92 einer hydraulischen Kupplung, vorzugsweise hydraulische Schnellkupplung gemäß der in DE 10 2021 133 085 A1 beschriebenen Art, der mit einem korrespondierend ausgebildeten Kupplungsteil der Druckmessgerätprüfvorrichtung 90 hydraulisch verbindbar ist. Bei verbundener hydraulischer Kupplung kann eine von der Druckmessgerätprüfvorrichtung 90 erzeugte externe Druckvorgabe als Druckreferenz auf das Druckmessgerät 62 einwirken. Auf diese Weise kann das Druckmessgerät 62 mittels verschiedener Druckvorgaben durchfahren werden. Ein Vergleich der von der Druckmessgerätprüfvorrichtung 90 vorgegebenen Druckreferenzen mit den vom Druckmessgerät 62 angegebenen Drücken führt zur Kalibrierung des Druckmessgeräts 62.

In der hydraulischen Leitung zwischen dem Prüfanschluss 88 und der Einrichtung 70 zum funktionalen Trennen ist vorzugsweise eine Trennmembran 96 angeordnet, über die im zweiten Kalibriermodus die Druckreferenzen zum Druckmessgerät 62 übertragen werden können. Je nach Ausgestaltung der Druckmessgerätprüfvorrichtung 90 ist eine derartige Trennmembran 96 nicht erforderlich.

Eine derartige Trennmembran 96 ist vorteilhaft, wenn die Druckmessgerätprüfvorrichtung 90 pneumatisch betrieben ist. In diesem Fall erzeugt die Druckmessgerätprüfvorrichtung 90 eine externe pneumatische Druckvorgabe als Druckreferenz, die auf die Trennmembran 96 einwirkt. Über die Trennmembran 96 wird diese Druckvorgabe hydraulisch zum Druckmessgerät 62 übertragen. Es ergibt sich somit ein hydraulischer Teil des Druckmesssystems 60 vom Druckmessgerät 62 bis zur Trennmembran 96 und ein pneumatischer Teil des Druckmesssystems 60 von der Trennmembran 96 bis zur Druckmessgerätprüfvorrichtung 90.

Nach Abschluss dieses Kalibriervorgangs im zweiten Kalibriermodus wird die Druckmessgerätprüfvorrichtung 90 wieder getrennt und die Einrichtung 70 zum funktionalen Trennen wieder in den Messmodus umgeschaltet, in dem das Druckmessgerät 62 nur noch hydraulisch mit dem Druckmittler 64 verbunden ist. In diesem Messmodus kann der Druck im Prozess gemessen werden.

Insgesamt stellt die Erfindung ein kostengünstiges Verfahren samt Vorrichtung zur Kalibrierung eines ein Druckmessgerät und einen Druckmittler umfassendes Druckmesssystems bereit, das eine Kalibrierung ohne Öffnung des Prozesses erlaubt.

In den Figuren werden folgende Bezugsziffern verwendet:
- 10: Druckmesssystem
- 12: Druckmessgerät
- 14: Druckmittler
- 16: Membran
- 18: Druckmittlerfüllflüssigkeit
- 20: Einrichtung zum funktionalen Trennen
- 22: Absperrelement
- 24: Kupplungsteile
- 26: hydraulische Leitung des Druckmessgeräts
- 28: hydraulische Leitung des Druckmittlers
- 30: Füllflüssigkeit des Druckmessgeräts
- 32, 32': Druckmittlerprüfvorrichtung
- 34, 34': Druckmessinstrument
- 36, 36': Vorrichtung zum Fördern eines definierten Volumens
- 38, 38': Füllflüssigkeit
- 40, 40': Zylinder-Kolben-Einheit
- 42, 42': Kolben
- 43: Feder
- 44, 44': Zylinder
- 46, 46': Kupplungsteil der Druckmittlerprüfvorrichtung
- 47: Absperrelement
- 48: Drucksensor
- 50: Steuereinheit
- 52: Stellmotor
- 60: Druckmesssystem
- 62: Druckmessgerät
- 64: Druckmittler
- 66: Membran
- 68: Druckmittlerfüllflüssigkeit
- 70: Einrichtung zum funktionalen Trennen
- 72: Druckmittlerprüfvorrichtung
- 76: Vorrichtung zum Fördern eines definierten Volumens
- 78: Füllflüssigkeit
- 80: Zylinder-Kolben-Einheit
- 82: Kolben
- 84: Zylinder
- 86: Absperrorgan
- 88: Prüfanschluss
- 90: Druckmessgerätprüfvorrichtung
- 92: Kupplungsteil des Prüfanschlusses
- 94: Kupplungsteil der Druckmessgerätprüfvorrichtung
- 96: Trennmembran

## Patentansprüche

1. Verfahren zum Kalibrieren eines zum Messen des Druckes in einem Prozess vorgesehenen Druckmesssystems (10; 60), das ein Druckmessgerät (12; 62) und einen Druckmittler (14; 64) mit einer Membran (16; 66) umfasst, deren eine Seite dem Prozess zugewandt ist und deren andere Seite mit einer Druckmittlerfüllflüssigkeit (18; 68) in Kontakt steht und ein Volumen im Druckmittler (14; 64) begrenzt,
**dadurch gekennzeichnet, dass**
das Kalibrieren des Druckmesssystems (10; 60) bei ungeöffnetem Prozess durchgeführt wird,
indem das Druckmessgerät (12; 62) vom Druckmittler (14; 64) funktional getrennt wird und danach das Druckmessgerät (12; 62) mittels einer vorbestimmten Druckvorgabe und einer Überprüfung eines sich aus dieser Druckvorgabe ergebenden Druckmesswertes des Druckmessgeräts (12; 62) kalibriert wird, und
indem das Volumen im Druckmittler (14; 64) in einer vorbestimmten Weise verändert, vorzugsweise erhöht, wird und anhand einer erfassten, aus dieser Volumenänderung resultierenden Druckveränderung der Druckmittler (14; 64) kalibriert wird.

2. Verfahren nach Anspruch 1,
**dadurch gekennzeichnet, dass**
bei funktionaler Trennung des Druckmessgeräts (12) vom Druckmittler (14) das Druckmessgerät (12) auch mechanisch vom Druckmittler (14) getrennt wird.

3. Verfahren nach einem der vorhergehenden Ansprüche,
**dadurch gekennzeichnet, dass**
zum Kalibrieren des Druckmittlers (14) anstelle des Druckmessgeräts (12) eine Druckmittlerprüfvorrichtung (32; 32') mit dem Druckmittler (14) verbunden wird.

4. Verfahren nach einem der vorhergehenden Ansprüche,
**dadurch gekennzeichnet, dass**
mittels der Druckmittlerprüfvorrichtung (32; 32') das Volumen der Füllflüssigkeit im Druckmittler (18) verändert wird.

5. Verfahren nach einem der vorhergehenden Ansprüche,
**dadurch gekennzeichnet, dass**
zum Kalibrieren des Druckmittlers (14) mittels der Druckmittlerprüfvorrichtung (32; 32') ein oder mehrere Druckmittlerinnendrücke gemessen werden und ein erwartetes Verhalten des Druckmittlers (14) mit dem realen Verhalten des Druckmittlers (14) verglichen wird.

6. Verfahren nach Anspruch 1,
**dadurch gekennzeichnet, dass**
das Druckmesssystem (60) eine mit dem Druckmessgerät (62), dem Druckmittler (64) und einer Einrichtung (70) zum funktionalen Trennen des Druckmessgeräts (62) vom Druckmittler (64) integrierte Druckmittlerprüfvorrichtung (72) aufweist.

7. Verfahren nach Anspruch 6,
**dadurch gekennzeichnet, dass**
mittels der Einrichtung (70) zum funktionalen Trennen die Druckmittlerprüfvorrichtung (72) zwischen einem
a) Messmodus, in dem, vorzugsweise nur, das Druckmessgerät (62) und der Druckmittler (64) hydraulisch verbunden sind und der Druck im Prozess gemessen wird,
b) einem ersten Kalibriermodus, in dem das Druckmessgerät (62) mit dem Druckmittler (64) und einer Druckmittlerprüfvorrichtung (72) hydraulisch verbunden ist und der Druckmittler (64) kalibriert wird, und
c) einen zweiten Kalibriermodus, in dem, vorzugsweise nur, das Druckmessgerät (62) mit einem Prüfanschluss (88) hydraulisch oder hydraulisch und pneumatisch verbunden ist und mittels einer externen Druckvorgabe kalibriert wird,
umgeschaltet werden kann.

8. Verfahren nach Anspruch 7,
**dadurch gekennzeichnet, dass**
im ersten Kalibriermodus mittels der Druckmittlerprüfvorrichtung (72) das Volumen der Füllflüssigkeit im Druckmittler (68) verändert wird.

9. Verfahren nach Anspruch 7 oder 8,
**dadurch gekennzeichnet, dass**
der Prüfanschluss (88) mit einer Druckmessgerätprüfvorrichtung (90), vorzugsweise Kalibriervorrichtung, hydraulisch und/oder pneumatisch verbunden wird, wobei die externe Druckvorgabe von der Druckmessgerätprüfvorrichtung (90) erzeugt wird und als Druckreferenz auf das Druckmessgerät (62) einwirkt.

10. Kalibrierbares Druckmesssystem zum Messen des Drucks in einem Prozess, das ein Druckmessgerät (12; 62) und einen Druckmittler (14; 64) mit einer Membran (16; 66) umfasst, deren eine Seite dem Prozess zugewandt ist und deren andere Seite mit einer Druckmittlerfüllflüssigkeit (18; 68) in Kontakt steht und ein Volumen im Druckmittler (14; 64) begrenzt, **gekennzeichnet durch**,
eine Einrichtung (20; 70) zum funktionalen Trennen des Druckmessgeräts (12; 62) vom Druckmittler (14; 64) derart, dass eine Kalibrierung des Druckmesssystems (10; 60) bei geöffnetem Prozess durchführbar ist,
eine Druckmessgerätprüfvorrichtung (90), die derart ausgebildet ist, um bei funktionaler Trennung des Druckmessgeräts (12; 62) vom Druckmittler (14; 64) nur das Druckmessgerät (12; 62) mit einer vorbestimmten Druckvorgabe derart zu beaufschlagen, dass mittels einer Überprüfung eines sich aus dieser Druckvorgabe ergebenden Druckmesswertes des Druckmessgeräts (12; 62) das Druckmessgerät (12; 62) kalibriert wird,
und eine Druckmittlerprüfvorrichtung (32; 32'; 72), die derart ausgebildet ist, um das Volumen im Druckmittler (14; 64) in einer vorbestimmten Weise derart zu verändern, vorzugsweise zu erhöhen, dass mittels einer erfassten, aus der Volumenänderung resultierenden Druckveränderung der Druckmittler (14; 64) kalibriert wird.

11. Druckmesssystem nach Anspruch 10,
**dadurch gekennzeichnet, dass**
die Einrichtung (20) zum funktionalen Trennen des Druckmessgeräts (12) vom Druckmittler (14) eine hydraulische Kupplung, insb. hydraulische Schnellkupplung, ist.

12. Druckmesssystem nach Anspruch 10 oder 11,
**dadurch gekennzeichnet, dass**
zum Kalibrieren des Druckmittlers (14) die Druckmittlerprüfvorrichtung (32; 32') anstelle des Druckmessgeräts (12) mit dem Druckmittler (14) verbunden ist.

13. Druckmesssystem nach einem der Ansprüche 10 bis 12,
**dadurch gekennzeichnet, dass**
die Druckmittlerprüfvorrichtung (32; 32') derart ausgebildet ist, um bei funktionaler Trennung des Druckmessgeräts (12) vom Druckmittler (14) das Volumen der Füllflüssigkeit im Druckmittler (18) zu verändern.

14. Druckmesssystem nach einem der Ansprüche 10 bis 13,
**dadurch gekennzeichnet, dass**
die Druckmittlerprüfvorrichtung (32; 32') Einrichtungen zum Messen eines oder mehrerer Druckmittlerinnendrücke aufweist und den Vergleich mit Sollwerten ermöglicht, die derart ausgebildet sind, um den Druckmittler zu kalibrieren.

15. Druckmesssystem nach Anspruch 10,
**dadurch gekennzeichnet, dass**
die Druckmittlerprüfvorrichtung (72) mit dem Druckmessgerät (62), dem Druckmittler (64) und der Einrichtung (70) zum funktionalen Trennen des Druckmessgeräts (62) vom Druckmittler (64) im Druckmesssystem (60) integriert ist.

16. Druckmesssystem nach Anspruch 15,
**dadurch gekennzeichnet, dass**
das Druckmesssystem (60) mittels der Einrichtung (70) zum funktionalen Trennen der Druckmittlerprüfvorrichtung (72) zwischen
a) einem Messmodus, in dem, vorzugsweise nur, das Druckmessgerät (62) und der Druckmittler (64) hydraulisch verbunden sind und der Druck im Prozess gemessen werden kann,
b) einem ersten Kalibriermodus, in dem das Druckmessgerät (62) mit dem Druckmittler (64) und der Druckmittlerprüfvorrichtung (72) hydraulisch verbunden ist und der Druckmittler (64) kalibriert werden kann, und
c) einem zweiten Kalibriermodus, in dem, vorzugsweise nur, dass Druckmessgerät (62) mit einem Prüfanschluss (88) hydraulisch oder hydraulisch und pneumatisch verbunden ist und mittels einer externen Druckvorgabe kalibriert werden kann,
umschaltbar ist.

17. Druckmesssystem nach Anspruch 16,
**dadurch gekennzeichnet, dass**
im ersten Kalibriermodus das Volumen der Füllflüssigkeit im Druckmittler (68) veränderbar ist.
